Europäisches Patentamt

European Patent Office

Office européen des brevets

(19)

(11) EP 0 740 806 B1

(12) **EUROPÄISCHE PATENTSCHRIFT**

(45) Veröffentlichungstag und Bekanntmachung des Hinweises auf die Patenterteilung:
**31.03.1999 Patentblatt 1999/13**

(21) Anmeldenummer: **95905554.2**

(22) Anmeldetag: **16.01.1995**

(51) Int Cl.⁶: **G05B 19/045**

(86) Internationale Anmeldenummer:
**PCT/DE95/00063**

(87) Internationale Veröffentlichungsnummer:
**WO 95/19590 (20.07.1995 Gazette 1995/31)**

(54) **VERFAHREN ZUR STEUERUNG EINES TECHNISCHEN PROZESSES NACH DEM PRINZIP DES ENDLICHEN AUTOMATEN**

PROCESS FOR CONTROLLING A TECHNICAL PROCESS ACCORDING TO THE FINITE-STATE PRINCIPLE

PROCEDE DE COMMANDE D'UN PROCESSUS TECHNIQUE SELON LE PRINCIPE DE L'AUTOMATE FINI

(84) Benannte Vertragsstaaten:
**AT CH DE DK ES FR GB IT LI PT**

(30) Priorität: **17.01.1994 DE 4401492**

(43) Veröffentlichungstag der Anmeldung:
**06.11.1996 Patentblatt 1996/45**

(73) Patentinhaber: **SIEMENS AKTIENGESELLSCHAFT**
**80333 München (DE)**

(72) Erfinder: **BUSCH, Armin**
**D-38110 Braunschweig (DE)**

(56) Entgegenhaltungen:
**US-A- 4 799 141**

- **IEICE TRANSACTIONS ON FUNDAMENTALS OF ELECTRONICS, COMMUNICATIONS AND COMPUTER SCIENCES, Bd. 76A, Nr. 10, Oktober 1993 TOKYO, JP, Seiten 1591-1597, XP 000421546 TOMOHIRO MURATA ET AL 'State Diagram Matrix for Hierarchical Specification of Reactive System '**

## Beschreibung

Die Erfindung geht aus von einem Verfahren nach dem Oberbegriff des Patentanspruches 1.

Zur Steuerung und Überwachung insbesondere umfangreicher Prozeßgeschehen werden heute vielfach Rechner oder Rechnersysteme verwendet. Die Programme, nach denen diese Rechner oder Rechnersysteme arbeiten, sind außerordentlich komplex. Ihre Erstellung ist zeit- und kostenaufwendig, insbesondere deshalb, weil die Programme regelmäßig nicht in einer problemorientierten Sprache erstellt werden, welche die jeweilige Prozeßsteuerung in einer für den Entwickler verständlichen Form beschreibt, sondern in einer an die Betriebsweise der Rechner angepaßten künstlichen Programmiersprache, die für den Entwickler meist wenig aussagekräftig ist. Insbesondere dann, wenn für derartige Programme auch Sicherheitsnachweise zu führen sind, vergrößern sich die Kosten und die Zeitspannen für die Entwicklung und Erstellung von Systemen zur Steuerung derartiger Prozeßgeschehen in unerwünschter Weise.

Ändern sich die in einem Programm berücksichtigten Forderungen an eine Steuerungsanlage, z. B. weil zusätzliche Prozeßelemente in das Geschehen eingebundenen werden sollen oder weil andere Prozeßanforderungen erfüllt werden müssen, so sind umfangreiche Programmierarbeiten zur Berücksichtigung dieser neuen Forderungen nötig; bei sicherheitsrelevanten Prozeßsteuerungen ist auch ein gesonderter Sicherheitsnachweis für die geänderte Software erforderlich.

Gerade was die Steuerung umfangreicher und komplizierter Prozeßgeschehen angeht, ist gelegentlich versucht worden, das komplexe Prozeßgeschehen in mehrere voneinander unabhängige und in sich überschaubare Teilgeschehen aufzugliedern und diese Teilgeschehen in separaten Rechnersystemen zu behandeln (Neue Technik, Nr. 2, Februar 1973, Seiten 77 bis 79). Für die Anwendung dieses Prinzips bei einem rechnergesteuerten Stellwerk ist vorgeschlagen worden (DE-29 27 169 C2), die Fahrstraßeneinstellung, die Weichenlaufüberwachung, die Signalstellung, die Betriebsauflösung, die Ersatzsignalstellung sowie die Wartung und Hilfsbedienung in gesonderten Rechnersystemen zu realisieren. Auch bei diesen in Teilprozesse aufgeteilten Prozeßsteuersystemen erfolgt die Programmierung der den einzelnen Teilprozessen zugeordneten Rechner nach wie vor in einer an die Betriebsweise der Rechner angepaßten Programmiersprache und nicht in einer für den Entwickler ohne weiteres verständlichen Form. Dort treten im Prinzip die gleichen Schwierigkeiten auf, wie sie bei der Steuerung eines in sich geschlossenen Prozeßgeschehens vorliegen.

Ansätze in Richtung auf eine für den Entwickler verständlichere und übersichtlichere problemangepaßte Programmierung im Gegensatz zu einer ausschließlich rechnerorientierten Programmierung gibt es bei der sog. objektorientierten Programmierung (Computer-Magazin 7-8/91, Seiten 34 bis 40). Bei der objektorientierten Programmierung wird zunächst das anwendungsorientierte Steuerungssystem, z. B. ein Stellwerk, in mehrere Ebenen von hierarchisch gegliederten Objektklassen unterteilt, von denen die höheren Klassen, z. B. die Signale, die allgemeineren und die nach unten hin gelegenen Klassen, z. B. die Vor- und Hauptsignale, die spezielleren Objekte, beschreiben. Die einzelnen Objektklassen fassen jeweils Individualobjekte mit gleichen Eigenschaften zusammen. Die Beschreibung der Objekte und Objekttypen erfolgt innerhalb der einzelnen Klassen, wobei in Richtung auf die unteren Hierarchieebenen immer speziellere Eigenschaften, in denen sich die Objekte voneinander unterscheiden, beschrieben sind. Innerhalb der einzelnen Ebenen sind auch die Verarbeitungsprogramme für die Objekte, die sog. Methoden, definiert. Sie bestimmen das Verhalten der Objekte und bestehen jeweils aus Folgen von Anweisungen, die auf das betreffende Objekt einwirken.

Diese Anweisungen orientieren sich an sogenannten inneren Zuständen der Objekte. Die inneren Zustände geben an, wie weit ein bestimmter Auftrag an das betreffende Objekt durch dieses bereits abgearbeitet wurde. Die Ausführung einer Anweisung oder eines Auftrages führt regelmäßig zu einer Veränderung des inneren Zustandes des Objektes, der seinerseits neue Aktionen veranlaßt. Die Abspeicherung der Vielzahl von Parametern für die Beschreibung sämtlicher möglicher innerer Zustände jedes einzelnen Objektes einer Prozeßsteuerung sowie der zugehörigen Methoden zur Veränderung der inneren Zustände in Folgezustände ist außerordentlich speicheraufwendig, vor allem aber unübersichtlich und birgt deshalb die Gafahr von Fehlern bei der Programmherstellung in sich.

Aus der US-A-4,799,141 ist ein Verfahren zur Steuerung eines technischen Prozesses mit endlichen Automaten bekannt, bei dem Objekte gleichzeitig mehrere Zustandsräume für mehrere gleichzeitig zur Ausführung anstehende, noch nicht vollständig abgearbeitete Aufträge aufweisen können und bei dem Objekte Unteraufträge zur Ausführung an andere Objekte weitergeben können. Jedes Objekt benötigt hierzu ausreichende Speicherkapazität, um alle für die Abarbeitung von Aufträgen/Unteraufträgen erforderlichen Zustandswerte (Befehle, Meldungen, Ausgangszustände, Endzustände) aufnehmen können. Bei komplexen Steuerungsaufgaben wird die Menge der möglichen Zustandswerte leicht unüberschaubar.

Aufgabe der Erfindung ist es, ein Verfahren nach dem Oberbegriff des Patentanspruches 1 anzugeben, mit dem es möglich ist, die Komplexität der Beschreibung eines Automaten bei gleichzeitiger Verringerung des erforderlichen Speicheraufwandes für die Beschreibung aller möglichen Zustandswerte und Aktionen zu verringern. Die Erfindung löst diese Aufgabe durch die Anwendung der kennzeichnenden Merkmale des Patent-anspruches 1. Die Beschreibung des Automaten wird dadurch übersichtlich, daß der Automat seine inneren Zustände selbst verwaltet, d. h. für die einzelnen Objekte müssen nicht mehr alle möglichen Zustands folgen sondern nur die tatsächlich vorhandene Zustands folge hinterlegt werden und diese Zu) standsfolge wird von dem jeweiligen Objekt aufgrund eingehender Informationen aktualisiert, indem neue Zustandswerte die alten Zustandswerte überschreiben. Für die individuelle Programmierung des Automaten ist lediglich die Definition der Ausgangsinformation erforderlich; die Definition von inneren Zuständen und die Festlegung von Zustandsübergängen wird durch einen im Automaten hinterlegten Formalismus vorgenommen.

Vorteilhafte Ausgestaltungen und Weiterbildungen des erfindungsgemäßen Verfahrens sind in den Unteransprüchen angegeben.

Die Erfindung ist nachstehend anhand der Zeichnung näher erläutert. Die Zeichnung zeigt in Figur 1 das Schema eines endlichen Automaten, in Figur 2 das Zusammenspiel von Bedingungen und Aktionen und in Figur 3 zwei Zustandsräume eines Objektes zusammen mit den Nachrichten, die den betreffenden Zustandsraum sowie Zustandsräume anderer Objekte beeinflussen.

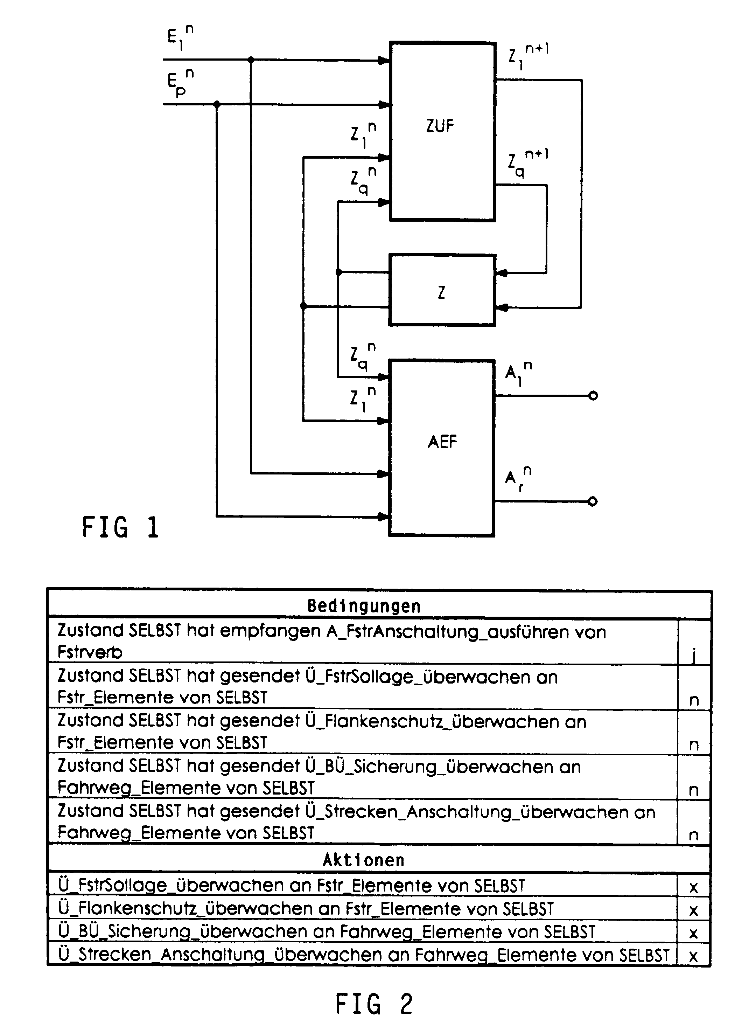

Figur 1 zeigt das an sich bekannte Modell eines endlichen Automaten für beliebige Objekte, auch Objekte funktioneller Art. Die Beschreibung des Automaten erfolgt mittels Eingangsdaten, inneren Zuständen und Ausgangsdaten. Neue innere Zustände und Ausgangsdaten werden jeweils nacheinander gebildet und zwar in Abhängigkeit von sich ändernden Eingangsinformationen oder in Abhängigkeit von neu gebildeten inneren Zuständen. Die vorhandenen inneren Zustände Z, die in einem Zustandsspeicher hinterlegt sind, werden nach Maßgabe von Zustandsüberführungsfunktionen ZUF modifiziert und als neue Zustände im Zustandsspeicher abgelegt. Eine Ausgabeerzeugungsfunktion AEF ermittelt Ausgangsinformationen A in Abhängigkeit vom augenblicklichen Zustand Z des Objektes und von den Eingangsdaten E, die auf den Automaten wirken. In der Darstellung des Automaten sollen die p ein- oder mehradrigen Eingangsleitungen $E_1$ bis $E_P$ interpretiert werden durch die Eigenschaft des Automaten, p unterschiedliche Nachrichten empfangen zu können; der hochgestellte Index n kennzeichnet dabei die Zeitzugehörigkeit der betrachteten Größe, in diesem Fall der Eingangsinformationen. Entsprechend den r Ausgangsleitungen Al bis Ar erzeugt der Automat r unterschiedliche Ausgangsinformationen. Zur Verwaltung seiner Zustände werden dem Automaten q Zustandskomponenten zugeordnet. Die Zustandsüberführungsfunktion ZUF modifiziert die vorhandenen Zustandswerte $Z_1^n$ bis $Z_q^n$ dieser Komponenten in aktuelle Zustandswerte $Z_1^{n+1}$ bis $Z_q^{n+1}$ und führt diese dem Zustandsspeicher und der Ausgabeerzeugungsfunktion AEF zur Bildung neuer Ausgangs informationen zu.

Die Beschreibung einer umfangreichen Prozeßsteuerung durch ihre inneren Zustände, Ein- und Ausgabeinformationen sowie Zustandsüberführungs- und Ausgabeerzeugungsfunktionen macht das Prozeßgeschehen für den Entwickler undurchsichtig. Die Erfindung sieht daher vor, jedes Objekt des steuernden Prozesses als eigenen Automaten zu betrachten. Dies gilt sowohl für die gegenständlich vorhandenen Objekte, wie z. B. Signale, Weichen und Gleisabschnitte z. B. bei der Stellwerkssteuerung, als auch für funktionelle Objekte, wie z. B. Fahrstraßensteuerung, Flankenschutzsuche und Auflösung von Fahrstraßen. Jeder solcher Automat behandelt nur ganz bestimmte Zustände der Gesamtanlage und ist daher in sich überschaubarer als ein die Gesamtlage darstellender Automat. Für jedes Objekt wird eine bestimmte Anzahl von objekttypischen inneren und äußeren Zuständen verwendet, die bei digitaler Verarbeitung der Ein- und Ausgangsinformationen des Automaten zweckmäßigerweise durch binäre Zustandskomponenten dargestellt werden. Jeder Auftrag verursacht innerhalb des Objektes, auf das er einwirkt, im Rahmen des Automatenmodells eine Folge von inneren Zuständen und Aktionen, bis das mit dem Auftrag beabsichtigte Ergebnis eintritt. Dabei kann ein Objekt für Aufgaben, die es nicht selbst ausführen kann, Unteraufträge an andere Objekte vergeben und die Ausführung dieser Unteraufträge durch Empfang von Quittungsbelegen überwachen. Auf diese Weise kann jedes Objekt mehrere Aufträge gleichzeitig bearbeiten. Alle Einzelheiten der Zustandsverwaltung und der Ausgangsdatenermittlung müssen für das betreffende Objekt definiert und festgehalten sein. Jeder Auftrag und jeder damit verbundene Ablauf im Automaten kann so isoliert betrachtet werden. Die Ermittlung der Bedingungen, die erfüllt sein müssen, damit ein Objekt einen Folgezustand einnimmt und/oder eine Ausgabeinformation ausgibt, sind nicht Gegenstand der vorliegenden Erfindung; diese ergeben sich vielmehr aus den Prozeßanforderungen selbst. Gegenstand der Erfindung ist die Art und Weise wie neue Zustände gebildet und Ausgangs informationen abgeleitet und wie die Zustände in den Objekten verwaltet werden.

Für jedes Objekt existiert ständig ein Zustandsspeicher, in dem die äußeren Zustände des Objektes, z. B. Weiche befindet sich in Plus-Lage oder in Minus-Lage, Weiche ist freigefahren, hinterlegt sind. Dieser Prozeß-Zustandsspeicher ist im objekt permanent eingerichtet und speichert die von dem Prozeß an das Objekt gemeldeten Zustände.

Zusätzlich gibt es für die einzelnen Objekte nur vorübergehend vorhandene Zustandsräume, die bedarfsweise installiert werden zur Abarbeitung von Aufträgen; sie geben durch innere Zustände an, wie weit der anliegende Auftrag bereits abgearbeitet wurde.

Es gibt für alle Objekte einen allgemeinen Algorithmus, der in Programmform hinterlegt ist und der angibt, wie ein Zustandsraum zu verwalten ist. Dieser Algorithmus besagt zunächst, daß für das Objekt ein Zustandsraum auf zuspannen ist, sobald ein Auftrag für das Objekt vorliegt. Unter dem Aufspannen eines Zustandsraumes ist die vorübergehende Bereitstellung eines gewissen Speicherplatzes für die Kennzeichnung der inneren Zustände eines Objektes zu verstehen. Jeder Zustandsraum wird gekennzeichnet durch eine Bezeichnung für den anliegenden Auftrag und durch die Bezeichnung des jeweiligen Auftraggebers; ihm ist die spätere Ausführung des Auftrages durch eine Quittungsmeldung anzuzeigen. Aufträge, die das Objekt nicht selbst ausführen kann, weil es hierzu der Mitwirkung anderer Objekte bedarf, werden vom Objekt umgesetzt in Unteraufträge für diese anderen Objekte. Dort werden eigene Zustandsräume zur Abarbeitung dieser Unteraufträge aufgespannt. In den mit Unteraufträgen beanspruchten Objekten erfolgt die Zustandsverwaltung in gleicher Weise wie bei den auftraggebenden Objekten.

In einem Objekt gibt es für jede an das Objekt gerichtete Nachricht (Auftrag, Quittung, Meldung) im Verarbeitungsprogramm des zu steuernden Prozesses einen Programmbereich, in dem die Aktionen mit den zugeordneten Bedingungen, unter denen die jeweilige Aktion ausgeführt wird, aufgelistet sind.

Die Bedingungen sind definiert durch das Vorhandensein ganz bestimmter Zustände des betreffenden Objektes. Diese tatsächlichen Zustände stehen in dem für die anliegenden Aufträge aufgespannten Zustandsräumen oder im Zustandsspeicher für Meldungen (äußere Zustände des Objektes). Die tatsächlich vorhandene Zustandsfolge des Objektes führt zu einer dieser Zustandsfolge im Programm fest zugeordneten Aktion, die z. B. in einre Reaktion des Objektes, z. B. einem Weichenumlauf, oder in der Vergabe von Sub-Aufträgen an andere Objekte bestehen kann. Die jeweilige Aktion wird also nicht durch Anwendung einer Zustandsübergangsfunktion auf die inneren Zustände des Objektes ermittelt, sondern sie ist im Programm fest vorgegeben.

Der allgemeine Algorithmus beinhaltet ferner, daß zu jedem gesendeten Auftrag eine Quittung vom jeweiligen Auftragnehmer zu erwarten ist. Die Quittung zeigt an, daß der jeweilige Auftrag ausgeführt wurde. Die Zuordnung einer Quittung zum jeweiligen Auftrag geschieht über die Kennzeichnung des Auftrages sowie des Auftraggebers und ggf. des Auftragnehmers in der Quittung. Der allgemeine Algorithmus besagt ferner, daß dann, wenn alle angegebenen und in einem Zustandsraum hinterlegten Aufträge über die zugehörigen Quittungen als erledigt gekennzeichnet sind, der Auftrag abgearbeitet ist. Zu seiner Löschung muß aber noch die Zustimmung des jeweiligen Auftraggebers vorliegen; diese ist ggf. einzuholen. Liegt sie vor, so wird der Zustandsraum abgeräumt, d. h. sämtliche in ihm gespeicherten Informationen werden gelöscht. Mit dem Löschen des Zustandsraumes existiert für das Objekt keine Erinnerung mehr, daß der ausgeführte Auftrag jemals bestanden hat; die bislang belegten Speicher können für andere Zustandsräume genutzt werden.

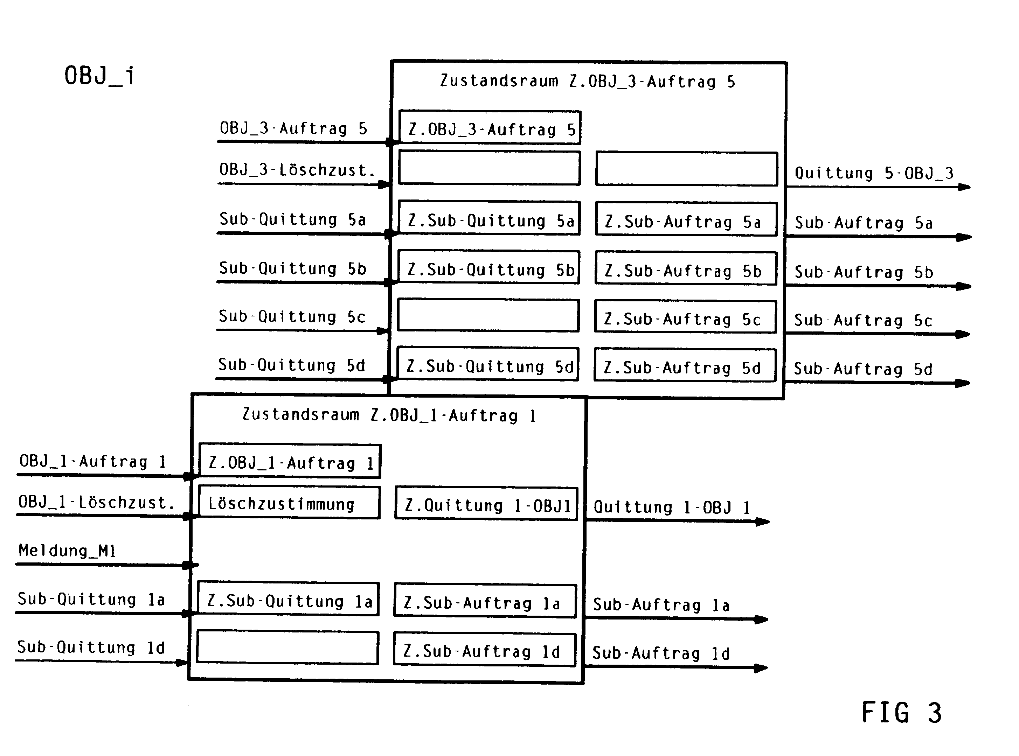

Das vorstehend Ausgeführte ist nachstehend anhand der Figuren 2 und 3 näher erläutert. Figur 2 bezeichnet dabei die inneren Zustände eines funktionellen Objektes, nämlich des Objektes "Fahrstraße", eines als endlicher Automat ausgebildeten Stellwerks und Figur 3 zwei für ein beliebiges Objekt aufgespannte Zustandsräume.

In Figur 2 ist angenommen, daß ein Objekt SELBST (=Fahrstraße) als Auftragnehmer von einem auftraggebenden Objekt, dem Fahrstraßenverbund Fstrverb den Auftrag zur Fahrstraßenanschaltung A FstrAnschaltung empfangen hat. Nach dem Aufspannen eines auftragsbasierten Zustandsraumes ruft das Objekt "Fahrstraße" das dem anstehenden Auftrag zugeordnete Programmteil auf, das die Auflistung bestimmter innerer Zustände und die Eintragung entsprechender Angaben in das Bedienungsteil des aufgespannten Zustandsraumes veranlaßt. Die einzutragenden binären Werte über das Vorhandensein oder Nichtvorhandensein bestimmter Zustände ermittelt das Objekt "Fahrstraße" durch Abfrage des (oder der) für das Objekt aufgespannten Zustandsräume oder des festen Zustands raumes für Meldungen. So soll das Objekt "Fahrstraße" nach dieser Abfrage z. B. das Kennzeichen j (=ja) für das Vorhandensein eines derartigen Anschaltauftrages in dem durch den Auftrag aufgespannten Zustandsraum hinterlegt haben. Weitere innere Zustände des Objektes sind ebenfalls in diesem Zustandsraum hinterlegt, nämlich Angaben darüber, ob das Objekt SELBST an die Elemente (alle Elemente) der Fahrstraße einen Auftrag zur Überwachung ihrer Sollage übermittelt hat, ob das Objekt SELBST einen Auftrag an die Fahrstraßenelemente zur Flankenschutzüberwachung gesendet hat, ob das Objekt an die Fahrwegelemente der Fahrstraße einen Auftrag auf Überwachung der Bahnübergangssicherungsanlagen gesendet hat und ob das Objekt an seine Fahrwegelemente einen Auftrag zur Überwachung der Streckenanschaltung (Blocksicherung, Einwirkung auf Nachbarbahnhof) gegeben hat. Die vier letztgenannten Teilbedingungen sollen annahmegemäß noch nicht erfüllt sein. Entsprechende Kennzeichen n (=nein) hat das Objekt im Zustandsraum gespeichert. Diese insgesamt fünf inneren Zustände in ihrer konkreten Ausbildung stellen die Bedingungen dar für die Ausführung ganz bestimmter im Programm vorgeschriebener Aktionen. Andere innere Zustände des Objekt SELBST könnten andere im Programm festgelegte Aktionen veranlassen; alle möglichen Zustandsfolgen (Bedingungen) und die zugehörigen Aktionen sind im Programm für das Objekt ("Fahrstraße") festgelegt. Die im konkreten Beispiel auszuführenden Aktionen sind im unteren Teil der Figur 2 aufgeführt. Sie beinhalten das Ausführen der Überwachungsaufträge, die im dargestellten Zustandsraum als noch nicht ausgeführt gekennzeichnet sind. Das Objekt übermittelt nun entsprechende Unteraufträge an die Elemente der Fahrstraße und sie erwartet entsprechende Rückmeldungen für die Ausführung dieser Unteraufträge. Das Objekt verwaltet seine inneren Zustände selbst, indem es entsprechende Angaben in Form binärer Größen in seinem Zusatzspeicher hinterlegt.

Mit dem Senden von Unteraufträgen an andere Objekte ändert sich der innere Zustand des aufgespannten Zustandsraumes. Ein zusätzlicher Auftrag an das Objekt "Fahrstraße" würde in diesem Beispiel bei dem Objekt "Fahrstraße" einen zweiten Zustandsraum erzeugen. Dieser zweite Zustandsraum und möglicherweise weitere Zustands räume werden unabhängig voneinander verwaltet. Das Objekt SELBST wartet nun auf die Quittierung der vergebenen Unteraufträge durch die jeweiligen Auftragnehmer. Die vollständige Quittierung aller Aufträge führt unter der Voraussetzung, daß der Auftraggeber, hier der Fahrstraßenverbund Fstrverb, der Löschung zustimmt, zum Abräumen des durch den abgehandelten Auftrag aufgespannten Zustandsraumes.

Figur 3 zeigt das gleichzeitige Vorhandensein ("Momentaufnahme") von z. B. zwei Zustandsräumen, die unabhängig voneinander für ein bestimmtes Objekt OBJ i aufgespannt wurden, wobei für diese Zustandsräume jeweils nur die Aktionen und die zugehörigen Quittungen, nicht aber die Bedingungen vermerkt wurden. Der obere Zustandsraum wurde durch den Auftrag 5 eines Objektes OBJ 3 aufgespannt; er ist durch den Namen des Auftrages und durch den Namen des Auftraggebers gekennzeichnet. Alle Quittungen und Unteraufträge, die zur Ausführung des Auftrages vorgesehen sind, werden mit dem Namen des Objektes versehen, das diese Quittung oder den Unterauftrag sendet. Ein Unterauftragnehmer-Objekt kann aus seinem Auftrag den Adressaten der Quittungsnachricht ermitteln. Das Auftraggeber-Objekt, das diese Quittung erwartet, weiß von wem es sie erwartet (Fig. 2), so daß die bei der Ausführung dieser Unteraufträge durch andere Objekte ausgelösten Quittungen dem betreffenden Zustandsraum des Objektes zweifelsfrei zugeordnet werden können. Die in der Zeichnung dick hervorgehobenen Pfeile markieren eingegangene bzw. ausgesandte Aufträge, Meldungen und Quittungen, die dünnen Pfeile markieren erwartete, noch nicht eingegangene bzw. ausgesandte Aufträge, Meldungen und Quittungen.

Auf den vom Objekt 3 her anliegenden Auftrag 5 hat das Objekt i Unteraufträge 5a bis 5d an bestimmte Objekte weitergegeben, die im einzelnen bezeichnet sind durch die Aktionen, die sich aus den Bedingungen der inneren Zustände des Objektes i ergeben. Von diesen Unteraufträgen sollen die Unteraufträge 5a, 5b und 5d abgearbeitet und durch entsprechende Quittungsmeldungen quittiert worden sein; die Quittierung des Unterauftrages 5c steht noch aus. Aus diesem Grunde ist der anliegende Auftrag auch noch nicht vollständig abgearbeitet und das Objekt i kann die Quittung für die Ausführung des Auftrages 5 noch nicht an das auftraggebende Objekt OBJ 3 übermitteln. Weil dies so ist, darf der durch den Auftrag 5 aufgespannte Zustandsraum für das Objekt i auch noch nicht abgeräumt werden.

Dies wird dadurch verhindert, daß das Objekt 3 dem Objekt i noch nicht seine Zustimmung zum Löschen des Zustandsraumes übermittelt hat. Diese übermittelt sie erst nach Empfang der Quittung für die Ausführung des anliegenden Auftrages.

Das Objekt i hat ferner von einem Objekt 1 einen Auftrag 1 zur Ausführung empfangen. Nach Eingang einer Meldung M1 wurden die Unteraufträge 1a und 1d an andere Objekte erteilt. Die Meldung M1 stammt aus einem Zusatzspeicher im Zustandsraum, der nicht dem allgemeinen Verfahren zur Behandlung von Zustandsräumen unterliegt. Für den Auftrag 1a ist die entsprechende Quittung 1a bereits eingetroffen; auf die Quittung 1d wird noch gewartet. Das Objekt i hat bereits eine Quittung an das auftraggebende Objekt 1 übermittelt, das diesem Objekt anzeigt, daß der Auftrag zur Ausführung übernommen wurde. Vom Auftraggeber, dem Objekt 1, liegt auch bereits die Löschzustimmung für den aufgespannten Zustandsraum Z OBJ, 1-Auftrag 1 vor. Wenn alle Unteraufträge quittiert sind, kann das Objekt i die zum Zustandsraum OBJ 1-Auftrag 1 gehörenden Zustandskomponenten sofort löschen.

Das erfindungsgemäße Verfahren gestattet es, den individuellen Aufwand für die Programmierung eines Automaten klein zu halten, weil für jedes Objekt nur die tatsächlich vorhandenen inneren Zustände festzuhalten sind und das Objekt diese inneren Zustände selbst verwaltet. Übersichtlich wird der Automat dadurch, daß auf die Angabe von Zustandsübergangsfunktionen verzichtet wird und daß stattdessen die jeweils auszuführenden Aktionen dem Tupel (Nachricht, Bedingungen) direkt zugeordnet sind. Dadurch, daß der überwiegende Teil der Zustandsräume für die Festlegung von Bedingungen und Aktionen jeweils nur vorübergehend installiert werden muß, wird für die Prozeßsteuerung insgesamt nur ein vergleichsweise geringes Speichervolumen benötigt.

**Patentansprüche**

1. Verfahren zur Steuerung eines technischen Prozesses durch Abarbeiten von einzelnen Steuerungsauftragen zugeordneten Verarbeitungsprogrammen nach dem Prinzip des endlichen Automaten mit in Zustandsräumen sowohl für gegenständliche als auch für funktionelle Objekte hinterlegten Bedingungen für die Ausführung vorgegebener Aktionen, wobei jedes Objekt gleichzeitig mehrere Zustandsräume für mehrere gleichzeitig zur Ausführung anstehende, noch nicht vollständig abgearbeitete Aufträge aufweisen kann,

   **dadurch gekennzeichnet,**

   daß jeder einem Objekt zugeführte Auftrag für dieses Objekt durch Reservieren eines Speicherbereiches für die Kennzeichnung der inneren Zustände des Objektes einen auftragsbasierten Zustandsraum aufspannt, der neben den durch ein Programm jeweils vorgegebenen Bedingungen für bestimmte Zustände des Objektes auch die aus dem Vorliegen dieser Bedingungen folgenden Aktionen des Objektes bezeichnet, wobei

daß die von dem Objekten aufgespannten auftragsbasierten Zustandsräume unabhängig voneinander verwaltet werden,

daß jeder auftragsbasierte Zustandsraum jeweils nur vorübergehend aufgespannt und nach vollständiger Abarbeitung des Auftrags durch Rücknahme der Reservierung des Speicherbereiches wieder abgeräumt wird,

daß ein jeweils zur Ausführung anliegender Auftrag nach Maßgabe der tatsächlich vorliegenden Bedingungen die Ausführung der sich danach ergebenen Aktionen durch das auftragnehmende Objekt selbst oder durch ein oder mehrere andere Objekte veranlaßt, an die Aktionen als Sub-Aufträge zur Ausführung weiterzugeben sind,

daß dem jeweils auftragebenden Objekt Quittungen oder Sub-Quittungen für das Ausführen der Aufträge oder Sub-Aufträge zuzuführen sind

und daß das Abräumen eines aufgespannten auftragsbasierten Zustandsraumes durch das den betreffenden Zustandsraum auf spannende Objekt außer von der Quittung über die Ausführung aller durch den ausgeführten Auftrag veranlaßten Aktionen abhängig gemacht ist von der Zustimmung desjenigen Objektes, von dem der zugehörige Auftrag stammt.

2. Verfahren nach Anspruch 1, **dadurch gekennzeichnet,**
daß die Zustandsräume aus die einzelnen Objektzustände bezeichnenden Zustandskomponenten bestehen und daß eine Zustandskomponenten aus empfangenen und gesendeten Nachrichten abgeleitet werden.

3. Verfahren nach Anspruch 2,
**dadurch gekennzeichnet,**
daß den Nachrichten Kennungen über den jeweiligen Auftraggeber, den Auftragnehmer und den Auftrag selbst beizuordnen sind.

4. Verfahren nach Anspruch 1.
**dadurch gekennzeichnet,**
daß neben den nur vorübergehend für die Dauer der Abarbeitung eines Auftrages auf spannbaren Zustandsräumen auch ein permanenter Zustandsraum für die Hinterlegung der äußeren Zustandswerte aller gegenständlichen Objekte einzurichten ist.

5. Verfahren nach Anspruch 1 oder 4,

**dadurch gekennzeichnet,**
daß der Wahrheitsgehalt der Zustandskomponenten und der Aktionen in den einzelnen Zustands räumen durch die Wertigkeit von Bits in einem für den betreffenden Zustandsraum belegten Speicher dargestellt wird.

6. Verfahren nach Anspruch 5,
**dadurch gekennzeichnet,**
daß sich einander ausschließende Zustandskomponenten eines Objektes für nicht gleichzeitig mögliche Objektzustande Zustandsteilmengen innerhalb eines Zustandsraumes bilden, die durch ein oder mehrere Bits unterschiedlicher Wertigkeit dargestellt werden.

**Claims**

1. Method of controlling a technical process by processing individual processing programs assigned to individual control jobs on the principle of the finite state machine with conditions stored in state spaces both for concrete and also for functional objects for the performance of specified actions, each object being capable of simultaneously having a plurality of state spaces for a plurality of jobs simultaneously awaiting performance, but not yet completely processed, characterized

in that every job fed to an object generates a job-based state space for said object by reserving a memory area for the characterization of the internal states of the object, which state space, in addition to the conditions specified in each case by a program for certain states of the object, also designates those actions of the object following from the presence of said conditions,

in that the job-based state spaces developed by the objects are managed independently of one another,

in that each job-based state space is always generated only temporarily and is unloaded again after complete processing of the job by rescinding the reservation of the memory area,

in that a job awaiting performance in each case initiates, according to the conditions actually existing, the performance of the actions then resulting by the jobreceiving object itself or by one or more other objects to which the actions are to be passed as sub-jobs for performance,

in that acknowledgements or sub-acknowledgements for the performance of the jobs or sub-jobs are to be fed to the job-issuing object in each case,

and in that the unloading of a generated, job-based state space by the object generating the state space concerned is made dependent not only on the acknowledgement relating to the performance of all the actions initiated by the job performed but on the agreement of that object from which the associated job originates.

2. Method according to Claim 1, characterized in that the state spaces comprise state components designating the individual object states and in that said state components are derived from received and sent messages.

3. Method according to Claim 2, characterized in that identifiers are to be assigned to the messages via the respective job issuer, the job receiver and the job itself.

4. Method according to Claim 1, characterized in that, in addition to the state spaces generable only temporarily for the duration of the processing of a job, a permanent state space for the storing of external state values is also to be installed for all concrete objects.

5. Method according to Claim 1 or 4, characterized in that the truth content of the state components and of the actions is represented in the individual state spaces by the significance of bits in a memory occupied for the state space concerned.

6. Method according to Claim 5, characterized in that state components excluding one another of an object for object states not possible simultaneously form state subpopulations within a state space which are represented by one or more bits of different significance.

**Revendications**

1. Procédé de commande d'une opération technique par traitement de programmes de traitement associés à des ordres de commande individuels suivant le principe de l'automate sans fin, comportant des conditions d'exécution d'actions prescrites mises en mémoire dans des zones d'état prévues aussi bien pour des objets concrets que pour des objets fonctionnels, chaque objet pouvant comporter en même temps plusieurs zones d'état pour plusieurs ordres qui viennent en même temps à exécution et qui ne sont pas encore complètement exécutés, caractérisé en ce que, à chaque ordre envoyé à un objet, il est ouvert pour cet objet, en réservant une zone de mémoire pour la caractérisation des états intérieurs de l'objet, une zone d'état qui est basée sur l'ordre et qui désigne, outre les conditions prescrites par un programme pour des états déterminés de l'objet, aussi les actions de l'objet consécutives à la présence de ces conditions, en ce que les zones d'état basées sur un ordre et ouvertes par les objets sont gérées indépendamment les unes des autres, en ce que chaque zone d'état basée sur un ordre n'est ouvert chaque fois que provisoirement et à nouveau vidée après traitement complet de l'ordre en reprenant la réservation de la zone de mémoire, en ce qu'un ordre assigné à exécution provoque, suivant ce qui est déterminé par les conditions effectivement présentes, la réalisation des actions qui en résultent par l'objet récepteur d'ordre lui-même ou par un ou plusieurs autres objets auxquels les actions sont à retransmettre comme sous-ordres pour exécution, en ce que des accusés de réception ou des sous-accusés de réception de l'exécution des ordres ou des sous-ordres sont à envoyer à l'objet donneur d'ordre et en ce que le vidage d'une zone d'état ouverte, basée sur un ordre, est rendu dépendant par l'objet ouvrant la zone d'état concernée, outre de l'accusé de réception concernant l'exécution de toutes les actions provoquées par l'ordre exécuté, de l'accord de l'objet dont provient l'ordre associé.

2. Procédé suivant la revendication 1, caractérisé en ce que les zones d'état sont constituées de composantes d'état désignant les états d'objets individuels et en ce que ces composantes d'état sont dérivées d'informations reçues et émises.

3. Procédé suivant la revendication 2, caractérisé en ce qu'il est adjoint aux informations des caractéristiques concernant le donneur d'ordre associé, le récepteur d'ordre et l'ordre elle-même.

4. Procédé suivant la revendication 1, caractérisé en ce qu'il est installé, outre les zones d'état pouvant n'être ouvertes que provisoirement pour la durée du traitement d'un ordre, aussi une zone d'état permanente pour la mise en mémoire des valeurs d'états extérieurs de tous les objets concrets.

5. Procédé suivant la revendication 1 ou 4, caractérisé en ce que la valeur de vérité des composantes d'état et des actions dans les zones d'état individuelles est représentée par le poids de bits dans une mémoire occupée pour la zone d'état concernée.

6. Procédé suivant la revendication 5, caractérisé en ce que des composantes d'état d'un objet qui s'excluent les unes les autres pour des états d'objets qui ne sont pas possibles en même temps forment à l'intérieur d'une zone d'état des quantités partielles d'état, qui sont représentées par un ou par plusieurs bits de poids différent.

**FIG 1**

| Bedingungen | |
|---|---|
| Zustand SELBST hat empfangen A_FstrAnschaltung_ausführen von Fstrverb | j |
| Zustand SELBST hat gesendet Ü_FstrSollage_überwachen an Fstr_Elemente von SELBST | n |
| Zustand SELBST hat gesendet Ü_Flankenschutz_überwachen an Fstr_Elemente von SELBST | n |
| Zustand SELBST hat gesendet Ü_BÜ_Sicherung_überwachen an Fahrweg_Elemente von SELBST | n |
| Zustand SELBST hat gesendet Ü_Strecken_Anschaltung_überwachen an Fahrweg_Elemente von SELBST | n |
| Aktionen | |
| Ü_FstrSollage_überwachen an Fstr_Elemente von SELBST | x |
| Ü_Flankenschutz_überwachen an Fstr_Elemente von SELBST | x |
| Ü_BÜ_Sicherung_überwachen an Fahrweg_Elemente von SELBST | x |
| Ü_Strecken_Anschaltung_überwachen an Fahrweg_Elemente von SELBST | x |

**FIG 2**

8

**OBJ_i**

| | |
|---|---|
| **Zustandsraum Z.OBJ_3-Auftrag 5** | |

OBJ_3-Auftrag 5 → Z.OBJ_3-Auftrag 5

OBJ_3-Löschzust. → → Quittung 5-OBJ_3

Sub-Quittung 5a → Z.Sub-Quittung 5a | Z.Sub-Auftrag 5a → Sub-Auftrag 5a

Sub-Quittung 5b → Z.Sub-Quittung 5b | Z.Sub-Auftrag 5b → Sub-Auftrag 5b

Sub-Quittung 5c → | Z.Sub-Auftrag 5c → Sub-Auftrag 5c

Sub-Quittung 5d → Z.Sub-Quittung 5d | Z.Sub-Auftrag 5d → Sub-Auftrag 5d

**Zustandsraum Z.OBJ_1-Auftrag 1**

OBJ_1-Auftrag 1 → Z.OBJ_1-Auftrag 1

OBJ_1-Löschzust. → Löschzustimmung | Z.Quittung 1-OBJ1 → Quittung 1-OBJ 1

Meldung_M1 →

Sub-Quittung 1a → Z.Sub-Quittung 1a | Z.Sub-Auftrag 1a → Sub-Auftrag 1a

Sub-Quittung 1d → | Z.Sub-Auftrag 1d → Sub-Auftrag 1d

**FIG 3**